## Europäisches Patentamt
## European Patent Office
## Office européen des brevets

(19)

(11) Publication number: **0 124 054**
**B1**

(12) # EUROPEAN PATENT SPECIFICATION

(45) Date of publication of patent specification: **03.12.86**

(21) Application number: **84104519.8**

(22) Date of filing: **20.04.84**

(51) Int. Cl.⁴: **F 16 B 35/00,** F 16 B 12/16,
F 16 B 25/00, F 16 B 5/02

(54) A threaded fastener capable of being manipulated in situ at the joint between two members.

(30) Priority: **28.04.83 IT 4003583**

(43) Date of publication of application:
**07.11.84 Bulletin 84/45**

(45) Publication of the grant of the patent:
**03.12.86 Bulletin 86/49**

(84) Designated Contracting States:
**AT BE CH DE FR GB IT LI LU NL SE**

(56) References cited:
**DE-A-2 549 342**
**DE-A-2 925 526**
**US-A-2 485 280**

(73) Proprietor: **"Frema di Marastoni Albino e Freddi Natalino S.n.c."**
**15 via Giuseppe Garibaldi**
**I-42047 Rolo (Reggio Emilia) (IT)**

(72) Inventor: **Marastoni, Albino**
**37, Via Garibaldi**
**I-42047 Rolo (Reggio Emilia) (IT)**

(74) Representative: **Gardi, Giuliano**
**Gardipatent Palazzo Prora 605, Via Giardini**
**I-41100 Modena (IT)**

Courier Press, Leamington Spa, England.

EP 0 124 054 B1

## Description

This invention relates to a threaded fastener which can be manipulated at the point where two members are brought together for joining — that is, a device for tightening together two wooden members such as would make up a piece of furniture, or a staircase, or for fastening together two or more plastic elements, or, more generally speaking, any material whatever including metal, providing that such material is not excessively hard, or at any rate, provided that it will admit entry of a self-tapping thread. The fastener is particularly suitable for applications where joints are to be concealed.

The prior art in this field comprises a fastening device for furniture-assembly having a capstan-head bolt, which pairs with an internally-and externally-threaded sleeve, this being screwed into a hole in one member — a cross member for instance — whilst the head of said bolt is located in a recess cut in the hidden side of the longitudinal member to which the cross member must be butt-jointed at right angles. The shank of the bolt passes through a longitudinal hole in the longitudinal member and thence into the threaded sleeve. The fastener thus disclosed is ideal for use in mass production, but is less suited to the assembly of better quality hand-built furniture, where the time required in drilling holes into each of the two members separately — not to mention ensuring their correct alignment — is approximately double that required in drilling a single hole in one member only.

The prior art thus stands in need of further improvement with regard to the necessity for reducing time and labour required in the assembly of hand-built furniture and staircases, and other related products.

From the foregoing, one may discern the need for a solution to the technical problem of realising a threaded fastener for joined wooden and plastic members, and members in other materials generally, which dispenses with the need for drilling one of the two said members whilst guaranteeing a solid joint, and permitting concealment of the recess where manipulation comes about, when said joint is viewed from the outside.

The invention described herein resolves the problem thus outlined by setting forth an axial element made up of a self-tapping point, a prismatic intermediate element permitting manipulation, a shank incorporating an intermediate threaded collar of identical hand and pitch to the self-tapping point, and an enlarged head whose shoulder abuts with a coaxial sleeve when said selp-tapping point is driven home into the second member; said sleeve, which completes the fastener described herein, being threaded internally so as to pair with said intermediate threaded collar, and lodged in the mouth of a longitudinal hole drilled in the first of the two members to be joined, the hole itself departing from a recess in said second member and accommodating the shank and head of the axial element, whilst the recess accommodates its prismatic element and self-tapping point.

The advantage offered by the invention is a saving both in time and in labour costs at small factory and workshop level.

The invention will now be described, by way of example, with the aid of accompanying drawings (3 sheets) in which:

Figure 1 is a longitudinal section through the fastener seen inserted into the first of two members to be joined;

Figure 2 is the same section as illustrated in Fig 1, though showing the finished joint;

Figure 3 is a section through III—III in Fig 1;

Figure 4 is a the same section as in Fig. 1, and shows the application of a capstan for tightening purposes, rather than a spanner;

Figure 5 is the same section as in Fig 2, but showing the application as per Fig 4;

Figure 6 is a section through IV—IV in Fig 4;

Figure 7 is the same section as in Fig 4, showing a variation in the method of fixing the fastener to the first member;

Figure 8 is the same section as in Figure 7, showing a further variation of fixing to said first member;

Figure 9 is a section through IX—IX in Figure 8.

With reference to the drawings, 1 denotes the first member, and 2 the second member, these being of wood or other relatively soft material, and destined to be joined together. 3 denotes the self-tapping point of the fastener's axial element, and 4 is a prismatic intermediate element which turns as one with said self-tapping point 3 when manipulated with a spanner. 5 denotes the shank of the axial element, coaxial with and departing from said prismatic intermediate element 4. A threaded collar 6 located at an intermediate point on said shank 5 is of identical band and pitch to the threaded self-tapping point 3. 7 denotes the rear end, or tail of the shank 5, whilst 8 denotes the enlarged head portion proper which butts against a previously-inserted sleeve 9 when the fastener is screwed home tight. Said sleeve 9 must be lodged firmly before manipulating the fastener, and to this end has an external thread of coarser pitch than that of the point 3 and collar 6, this coarse, external thread being driven into said first member 1. The sleeve's internal thread pairs with said collar 6. 10 denotes an axial hole driller in said member 1 which accommodates the fastener's head 8, shank 5 and sleeve 9, the latter being driven into the mouth of said axial hole. 11 denotes a recess formed in the first member 1 at the point where this abuts with the second member 2, and offering one open side to permit access with a spanner.

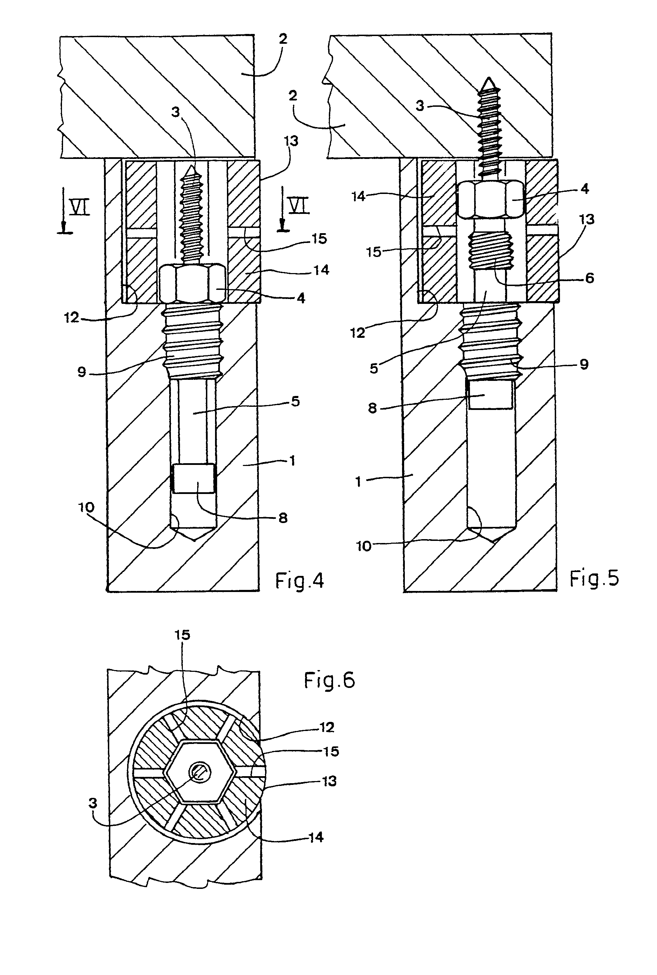

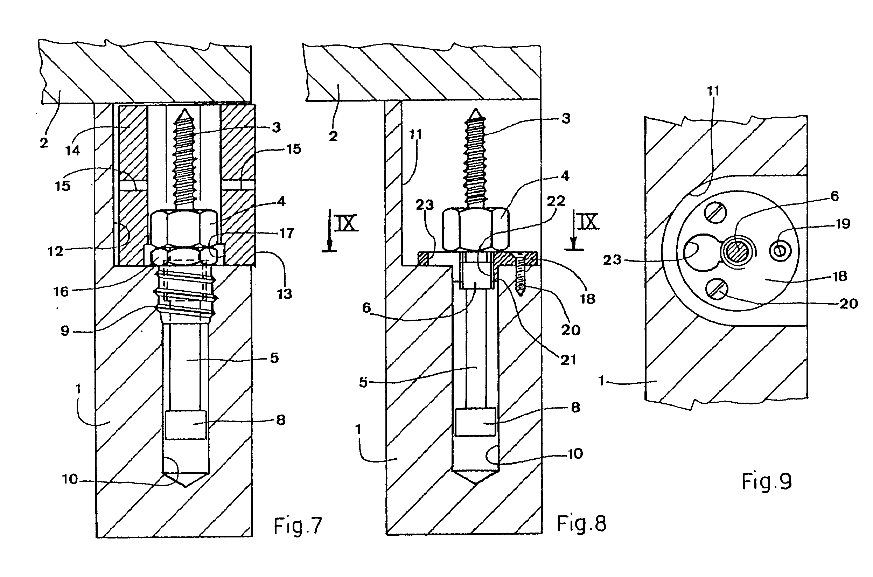

In Figure 4, 12 denotes a recess of circular cross-section, left open at one side just enough to allow protrusion of part of the lateral surface 13 of a capstan 14, this cylindrical in shape and fitted into said recess 12 so as to slide axially with respect to the fastener's prismatic manipulating element 4. The peripheral holes 15 in the capstan permit insertion of a tommy by means of which to turn capstan and fastener together. In Figure 7, 16 denotes a prismatic extension of the sleeve 9 which remains fast thanks to a recessed portion 17 at one end of the capstan 14, and offers the option of embodying said sleeve 9 with an external thread of opposite hand to that of its internal thread so as to prevent unwarranted loosening once fitted.

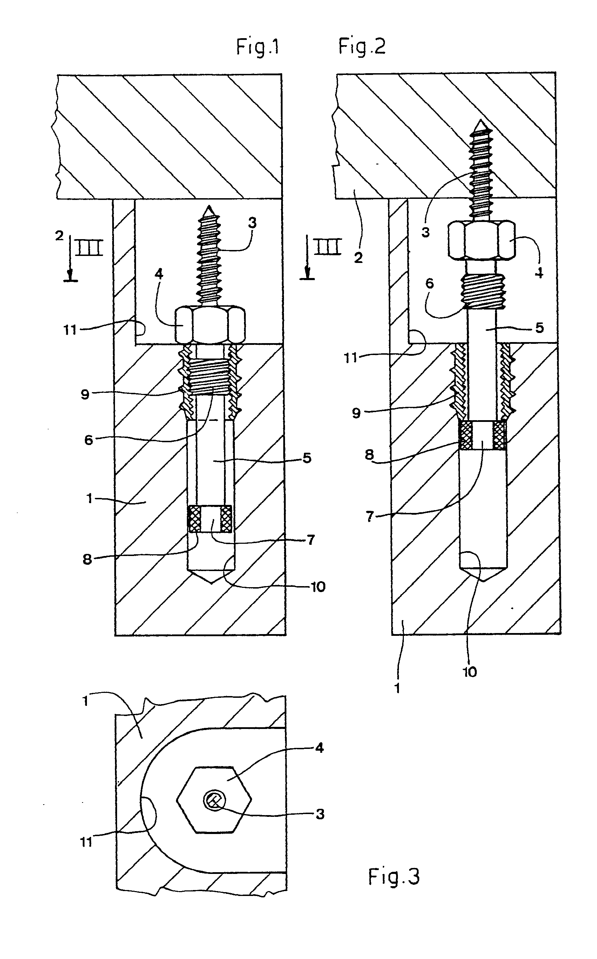

In Fig 8, a circular plate 18 replaces the sleeve 9 and is preferable thereto. Holes 19 pass through the plate and permit insertion of screws 20 which hold the plate 18 itself solidly to the first member 1. A collar 21 incorporated into said circular plate 18 permits of locating the internal axial thread 22 which, occupying the depth of plate-and-collar combined, affords the necessary stability when paired with the thread 6 offered by the fastener's shank 5, as well as ensuring alignment of the latter within the member's axial hole 10. 23 denotes a hole located eccentrically in said circular plate 18; this serving to allow passage of the axial element's head 8, and therefore of greater diameter than that of hole 22 alongside. The fastener as illustrated in Figs 1, 2 and 3 functions thus: having drilled the hole in the first member 1 and cut out the recess 11, the sleeve 9 is inserted to a tight fit in the mouth of the hole itself 10; this done, a spanner is applied to the prismatic element 4 and a turning movement imparted.

The fastener continues to be turned via its prismatic element 4 until the self-tapping point 3 enters the second member 2, and tightened even to the extent that its collar 6 exits completely from the sleeve 9. The fastener is finally home once the shoulder of its head 8 abuts with the rear of the sleeve 9, and beyond this point, further pressure can be exerted to as degree just sufficient to draw the two members 1 and 2 tight, one against the other, and ensure a solid , well-made butt-joint.

When carrying the invention into effect, materials adopted, dimensions, and details of the design may all differ from the foregoing without by any means straying from within the bounds of protection afforded to the concept by appended claims — for instance, the sleeve 9 — instead of being threaded externally — might equally well be pressed into its axial hole 10 in the first member 1.

## Claims

1. Threaded fastener, capable of being manipulated in situ at the join between two members (1, 2) and comprising a sleeve (g) with internal and external threads lodged in a hole (10) in the first member (1), this having a recess (11) permitting of access to turn a screw paired with the sleeve's internal thread, and characterised by an axial element having a self-tapping point (3) which enters the second member (2), a prismatic intermediate element (4) permitting manipulation, a shank (5) incorporating an intermediate threaded collar (6) of identical hand and pitch to said self-tapping point, and an enlarged head (8) whose shoulder butts with a coaxial sleeve (9), the latter internally threaded so as to pair with the thread offered by said collar (6); said sleeve, which completes the fastener, being lodged in the mouth of a longitudinal hole (10) drilled in the first (1) of said two members, which accommodates the shank (5) and head (8) of the fastener's axial element, these being able to slide therein; said prismatic intermediate element (4) and said self-tapping point (3) being located initially in a rearwards position along the fastener axis, within a recess (11, 12) formed in said first member (1) the point where this abuts with said second member (2).

2. Fastener as claimed in claim 1 characterised in that it comprises a capstan (14) for manipulating purposes, provided with radial holes (15) and exhibiting a cylindrical outer surface (13), which fits into a cylindrical recess (12) offering a limited opening for said manipulating purposes; said capstan and said prismatic element (4) turning as one within said recess.

3. Fastener as claimed in claim 1 characterised in that said sleeve (9) is externally threaded with left and right hand turns for the purposes of its being driven in said axial hole (10), and to that end, is provided with a prismatic extension (16) free to turn independently of said capstan (14) by virtue of a recessed portion (17) at the end of the latter nearest thereto.

4. Fastener as claimed in claim 1 characterised in that the threaded collar (6) thereof pairs with the internal thread cut into an element consisting of a circular plate (18) and associated collar (21) permitting alignment with the mouth of said axial hole (10); said plate being provided with holes (19) which permit fixing thereof to the recess surface farthest from the butt-join with said second member (2), and with an eccentrically located hole (23) for insertion of the rear end of said shank (5).

## Patentansprüche

1. Gewindeversehenes Befestigungselement zur in-situ Verbindung von zwei Bauelementen (1, 2), das eine Muffe (9) mit Innen- und Aussengewinde in einer Bohring (10) des ersten Bauelemente (1) beinhaltet, wobei eince Aussparung an demselben den Zugang zu einer mit dem Innengewinde der Muffe gepaarten Schraube (4) freigibt, dadurch gekennzeichnet, daß es ein axiales und in das zweite Bauelement (2) eingreifendes Element mit selbstschneidender Stelle (3), ein prismenförmiges Zwischenelement zur Verstellung, einen Schaft (5) mit einem zwischengelagerten und zur selbstschneidenden Stelle grössen- und steigungsgleichen Gewindebund (6) und einen verbreiterten Kopf (8) aufweist, dessen Schulter gegen eine koaxiale Muffe (9) mit Innengewinde zur Paarung genannten Gewindebundes anschlägt. Gennante Muffe vervollständigt das Befestigungselement und liegt und der Austrittsöffnung einer länglichen und in das erste (1) genannter Bauelemente eingedrehten Bohrung (10), welche den Schaft (5) und den Kopf (8) des axialen und daren gleitenden Befestigungselementes aufnimmt. Das genannte prismenförmige Zwischenelement (4) und die genannte selbstschneidende Stelle (3) liegen zu Beginn in einer hinteren Position längs der Befestigungsachse innerhalb einer Aussparung (11, 12) des genannten ersten Bauelementes (1) and der Anschlagstelle mit genanntem zweiten Bauelement (2).

2. Befestigungselement nach Patentanspruch 1, dadurch gekennzeithnet, daß es eine Verstellrolle (14) mit radial angeordneten Löchern und einer zylinderförmigen und auf die ausbildungsgleiche Aussparung (12) abgestimmte Aussenfläche (13) aufweist, womit eine kleine Öffnung zu Verstellzwecken erhalten wird. Genannte Verstellrolle und genanntes prismenförmiges Zwischenelement (4) drehen gemeinsam in dieser Aussparung.

3. Befestigungselement nach Patentanspurch 1, dadurch gekennzeichnet, daß genannte Muffe (9) zum Eintreiben in genannte axiale Bohrung (10) ein links- bzw. rechtsgängiges Aussengewinde aufweist, zu diesem Zweck einen prismenförmigen und zur Verstellrolle (14) anhand einer Aussparung (17) an deren nächstliegendem Ende freidrehenden Aufsatz (16) aufweist.

4. Befestigungselement nach Patentanspruch 1, dadurch gekennzeichnet, dass der Gewindebund mit einem in ein Element geschnitteners Innengewinde gepaart wird, wobei das Element aus einer kreisförmigen Platte (18) und zugehörigem Bund (21) zur Ausrichtung auf die Austrittsöffnung genannter axialen Bohrung (10) besteht. Genannte Platte weist Befestigungslöcher (19) and der zur Verbindung mit dem zweiten Bauelement (2) entferntesten Ausparungsfläche und ausserdem eine exzentrische Bohrung (23) zur Aufnahme des hinteren Schaftendes (5) auf.

**Revendications**

1. Moyen d'assemblage avec filetage capable d'etre utilisé sur place pour l'assemblage de deux éléments (1, 2), et comprenant un manchon (9) avec des filets intérieurs et extérieurs logés dans une cavité (10), dans le premier élément (1), celui-ci ayant un espace (11) permettant l'accès pour visser un boulon (4) accouplé avec le filetage intérieur des manchons, caractérisé par un élément axial ayant un point d'auto-filetage (3) qui entre dans le second élément (2), un élément prismatique intermédiaire (4) permettant la manipulation, une tige (5) incorporant une bague filetée intermédiaire (6) d'une meme dimension et d'un meme pas au dit point auto-fileté, et une tete élargie (8) dont l'épaulement s'adapte à un manchon coaxial (9), ce dernier fileté intérieurement de façon à s'accoupler avec le filet présenté par la dite bague (6); le dit manchon, qui complète la fermeture, étant logé dans l'embouchure d'une cavité longitudinale (10) creusée dans le premier (1) des deux dits éléments et qui adapte la tige (5) et la tete (8) de l'élément axial de la fermeture, ceux-ci étant capables d'y glisser; le dit élément prismatique intermédiaire (4) et le dit point auto-fileté (3) étant situés au début dans une position postérieure le long de l'axe de la fermeture, à l'intérieur d'un espace (11, 12) formé dans le dit premier élément (1) au point oú il s'abouche avec le dit second élément (2).

2. Moyen d'assemblage selon la revendication 1 caractérise par le fait qu'elle comprend un cabestan (14) pour des raisons de manipulation, pourvu de cavités radiales (15) et montrant une surface externe cylindrique (13) qui s'adapte dans un espace cylindrique (12) offrant une ouverture restreinte pour les dites raisons de manipulation; le dit cabestan et le dit élément prismatique (4) tournant comme à l'intérieur du dit espace.

3. Moyen d'assemblage selon la revendication 1 caractérisé par le fait que le dit manchon (9) est fileté extérieurement avec des tours de vis à gauche et à droite dans le but d'etre porté dans la dite cavité axiale (10), et à cette fin est pourvu d'une extension prismatique (16) libre pour tourner indépendamment du dit cabestan (124) grace à une section espacée (17) à la fin de ce dernier, le plus près de ceci.

4. Moyen d'assemblage selon la revendication 1 caractérisé par le fait que labague filetée (6) s'accouple partant avec le filetage intérieur dans un élément consistant en une plaque circulaire (18) et une bague y associée (21) permettant l'alignement avec l'embouchure de la dite cavité (10), la dite plaqee étant pourvue de trous (19) qui permettent de fixer partant à la surface de l'espace le plus éloigné du joint d'abouchage avec le dit second élément (2), et avec un trou situé excentriquement (23) pour l'insertion de l'extrémité postérieure de la dite tige (5).

0 124 054

Fig.1    Fig.2

Fig.3

1

Fig.4

Fig.5

Fig.6

3

Fig.7

Fig.8

Fig.9

IX

IX

2 14 3 15 15 4 12 17 16 13 9 5 1 8 10

2 11 3 23 4 22 6 5 18 20 21 1 8 10

11 6 19 23 18 20 1